# EUROPEAN PATENT APPLICATION

(11) **EP 4 715 990 A1**
(43) Date of publication of application: **25.03.2026**
(21) Application number: 25186862.6
(22) Date of filing: 02.07.2025
(51) Int. Cl.: H01M 50/342, H01M 50/531, H01M 50/367, H01M 50/533, H01M 50/536, H01M 50/107, H01M 10/04

(54) **SECONDARY BATTERY, BATTERY PACK AND ELECTRONIC DEVICE**

(30) Priority: 18.09.2024 CN 202422274037 U
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

A secondary battery (100), a battery pack (10), and an electronic device (1) are provided. The secondary battery (100) includes a housing (110), an electrode assembly (120) accommodated in the housing (110), and a current collector (140, 150). The housing (110) includes an end wall (111, 114), and an explosion-proof valve (115) is disposed on the end wall (111, 114). The includes a tab facing the end wall (111, 114). The current collector (140, 150) is disposed between the electrode assembly (120) and the end wall (111, 114), and is electrically connected to the tab. At least one fragile part (141) is disposed on the current collector (140, 150), and the fragile part (141) is configured to break when the internal pressure of the secondary battery (100) exceeds a threshold value. At least part of the current collector (140, 150) is bent away from the electrode assembly (120).

## Description

### BACKGROUND

### Field of the Disclosure

The present disclosure relates to the field of battery technology, and specifically relates to a secondary battery, a battery pack, and an electronic device.

### Description of Related Art

In the related art, in order to ensure normal pressure release of a secondary battery and reduce the risk of battery explosion, explosion-proof valves are normally constructed on one or both end walls of a housing. When the pressure inside the housing is greater than the threshold value, the explosion-proof valve opens, so that when the secondary battery undergoes thermal runaway, the explosion-proof valve opens to discharge internal substances from the secondary battery. When the secondary battery undergoes thermal runaway, even if the explosion-proof valve opens successfully, a current collector might still block the internal material from being discharged out of the secondary battery, which will reduce a safety performance of the secondary battery.

### SUMMARY OF THE DISCLOSURE

The present disclosure provides a secondary battery, a battery pack, and an electronic device to overcome the technical problem that the discharge of internal substances is blocked by a current collector when the secondary battery undergoes thermal runaway.

To achieve the above purpose and other related purposes, the present disclosure provides a secondary battery, a battery pack, and an electronic device. The secondary battery includes a housing, an electrode assembly, and a current collector. The housing includes an end wall, and an explosion-proof valve is disposed on the end wall. The electrode assembly is accommodated in the housing, and the electrode assembly includes a tab facing the end wall. The current collector is disposed between the electrode assembly and the end wall and is electrically connected to the tab. At least one fragile part is disposed on the current collector. The fragile part is configured to break when an internal pressure of the secondary battery exceeds a threshold value, and at least a part of the current collector is bent in a direction away from the electrode assembly to reduce obstruction to a pressure release region. Along a radial direction of the current collector, a span of the fragile part is a. A minimum central angle α covering the fragile part is drawn from the center of the current collector. A minimum radial width of a region of the current collector covered by the minimum central angle α is b, and 0.4b≤a≤0.9b.

In an example of the secondary battery of the present disclosure, along the radial direction of the current collector, a maximum distance from the fragile part to the center of the current collector is R1, a minimum distance from the explosion-proof valve to a center of the end wall is R2, wherein R2-R1≤3mm.

In an example of the secondary battery of the present disclosure, the current collector includes a center hole. A minimum distance from the fragile part to an edge of the center hole is c, wherein c≤2mm.

In an example of the secondary battery of the present disclosure, R2-R1≥c.

In an example of the secondary battery of the present disclosure, there are multiple fragile parts, and at least one of the multiple fragile parts is not connected to any of the other fragile parts.

In an example of the secondary battery of the present disclosure, the number of fragile parts is at least 3. All fragile parts are distributed along a circumferential direction of the current collector. A turning angle of a radially outermost contour of a gap region between every two adjacent fragile parts is β, wherein β≤120°.

In an example of the secondary battery of the present disclosure, the current collector and the housing are welded and connected to form at least one first weld mark. Along the circumferential direction of the current collector, two points located on both circumferential sides of the first weld mark are respectively connected to the center of the current collector to form a central angle γ. Each region surrounded by the fragile part or the gap region between every two adjacent fragile parts may form a bent part when the internal pressure of the secondary battery exceeds the threshold value. A minimum central angle δ covering the bent part is drawn from the center of the current collector. Each central angle δ at least partially overlaps with the central angle γ.

In an example of the secondary battery of the present disclosure, a minimum distance between the first weld mark and the fragile part is greater than or equal to 1mm.

In an example of the secondary battery of the present disclosure, the current collector and the tab are welded and connected to form at least one second weld mark, and a minimum distance between the second weld mark and the fragile part is greater than or equal to 1mm.

The present disclosure also provides a battery pack, and the battery pack includes the secondary battery described in any one of the above embodiments.

The present disclosure also provides an electronic device, and the electronic device includes the battery pack described above.

### BRIEF DESCRIPTION OF THE DRAWINGS

In order to more clearly illustrate the technical solutions in the embodiments of the present disclosure or the related art, the drawings required for use in the description of the embodiments or the related art will be briefly introduced below. Clearly, the drawings in the following description are only some embodiments of the present disclosure. For those of ordinary skill in the art, other embodiments can also be obtained according to these drawings without creative effort.
FIG. 1 is a schematic view of an overall structure in an example of a secondary battery of the present disclosure.
FIG. 2 is a schematic view of a structure of an electrode assembly in an example of the secondary battery of the present disclosure.
FIG. 3 is a schematic view of welding a first current collector and the electrode assembly in an example of the secondary battery of the present disclosure.
FIG. 4 is a schematic view of welding the first current collector and the electrode assembly in another example of the secondary battery of the present disclosure.
FIG. 5 is a schematic view of an example of a battery pack of the present disclosure.
FIG. 6 is a schematic view of an example of an electronic device of the present disclosure.

### DESCRIPTION OF EMBODIMENTS

The following describes the embodiments of the present disclosure through specific examples. Those skilled in the art can easily understand other advantages and effects of the present disclosure from the content disclosed in this specification. The present disclosure may also be implemented or applied through other different specific embodiments, and various details in this specification may also be modified or changed based on different viewpoints and applications without departing from the spirit of the present disclosure. It should be noted that, in the absence of conflict, the following examples and features in the examples may be combined with each other. It should also be understood that the terms used in the examples of the present disclosure are for describing specific embodiments and are not intended to limit the scope to be protected by the present disclosure. Test methods without specific conditions noted in the following examples are generally conducted according to conventional conditions or according to conditions recommended by respective manufacturers.

When numerical ranges are provided in examples, it should be understood that, unless otherwise specified in the present disclosure, both endpoints of each numerical range and any numerical value between the two endpoints may be selected. Unless otherwise defined, all technical and scientific terms used in the present disclosure are consistent with the mastery of technical personnel in the related art in this technical field and the description of the present disclosure. Any methods, equipment, and materials of the related art that are similar or equivalent to the methods, equipment, and materials in the examples of the present disclosure may also be used to implement the present disclosure.

It should be noted that terms such as "upper", "lower", "left", "right", "middle", and "one" referenced in this specification are merely for clarity of description and are not intended to limit the implementable scope of the present disclosure. Changes or adjustments to their relative relationships, without substantial changes to the technical content, should also be considered within the implementable scope of the present disclosure.

A secondary battery includes a housing and an electrode assembly. The electrode assembly is accommodated within the housing, and the electrode assembly is a component where electrochemical reactions occur in the secondary battery. The housing may contain one or more electrode assemblies.

The electrode assembly is mainly formed by winding or stacking positive electrode sheets and negative electrode sheets, and a separator is normally disposed between the positive electrode sheet and the negative electrode sheet. The positive electrode sheet includes a positive electrode current collector and a positive electrode active substance. The positive electrode active substance is coated on a surface of the positive electrode current collector. The positive electrode current collector includes a coated region coated with an active substance and an uncoated region not coated with the active substance. The uncoated region forms a positive electrode tab of the electrode assembly after winding. The negative electrode sheet includes a negative electrode current collector and a negative electrode active substance. The negative electrode active substance is coated on a surface of the negative electrode current collector. The negative electrode current collector includes a coated region coated with the active substance and an uncoated region not coated with the active substance. The uncoated region forms a negative electrode tab of the electrode assembly after winding.

The secondary battery further includes a current collector disposed between an end wall of the housing and a corresponding end surface of the electrode assembly. The current collector is welded to the positive electrode tab or the negative electrode tab to form a tab connection part. In addition, an explosion-proof valve is constructed on one or both end walls of the housing, so that when the battery undergoes thermal runaway, the explosion-proof valve opens to discharge an internal substance from the battery.

However, the inventor found that when the secondary battery undergoes thermal runaway, even if the explosion-proof valve opens successfully, the current collector still blocks the internal substance from being discharged out of the secondary battery, which will reduce the safety performance of the secondary battery. To solve this problem, in some current collectors, the inventor makes adjacent tab connection parts of the current collector disconnect from each other without connection, so that the tab connection parts are folded during pressure release to reduce obstruction to discharge of the internal substance. However, such design will reduce the overall strength of the current collector and affect a flatness of the current collector, which will further increase the difficulty of welding the current collector with the tab, and will also reduce the reliability of the welding connection between the current collector and the tab.

In view of the foregoing, the present disclosure provides a technical solution, wherein multiple fragile parts are disposed on the current collector. The fragile parts are configured to break when the internal pressure of the secondary battery exceeds a threshold value. At least a part of the current collector is bent in a direction away from the electrode assembly to reduce obstruction to a pressure release region on the end wall. In this way, it is possible to overcome the technical problem that the discharge of internal substance is blocked by the current collector when the secondary battery undergoes thermal runaway.

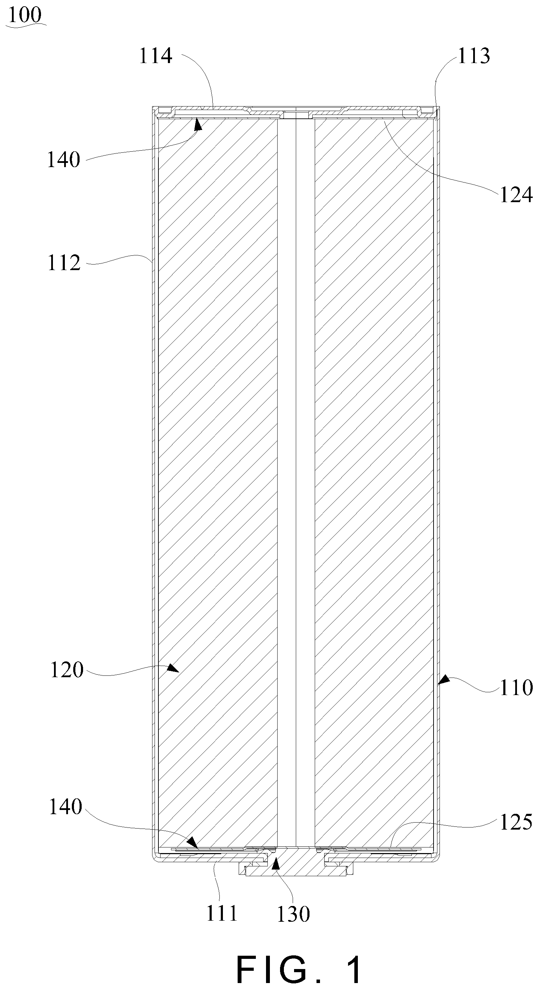

Please refer to FIG. 1 to FIG. 6, the present disclosure provides a secondary battery 100. The secondary battery 100 includes: a housing 110, an electrode assembly 120, a terminal 130, and a current collector.

Please refer to FIG. 1, the housing 110 includes an end wall. Specifically, in this embodiment, the housing 110 includes a first end wall 114 and a second end wall 111 that are opposite to each other, and a side wall 112 surrounding the first end wall 114 and the second end wall 111. In order to ensure normal pressure release of the secondary battery 100 and reduce the risk of explosion of the secondary battery 100, an explosion-proof valve 115 is normally disposed on the first end wall 114 and/or the second end wall 111. The shape of the explosion-proof valve 115 may be circular, petal-shaped, rectangular, elliptical, polygonal or other irregular shapes. The explosion-proof valve 115 may be a closed shape or an unclosed shape. The explosion-proof valve 115 may be a score line or a thinned structure, and so on, which is not limited herein, as long as the explosion-proof valve 115 can open to form the pressure release region for pressure release when the internal pressure of the secondary battery 100 reaches the threshold value, thereby achieving directional explosion of the secondary battery 100.

Please refer to FIG. 1, as long as a stable sealing and electrical connection relationship can be formed, the connection between the first end wall 114 and the side wall 112 as well as between the second end wall 111 and the side wall 112 may be achieved through various methods, for example, they may be connected by means of integral stamping forming, integral casting forming or separate weld marking, etc. The surrounding configuration of the side wall 112 is not limited, the surrounding configuration may be formed in a cylindrical form or a prismatic form, or may be formed along any other closed loop contour that can match with the first end wall 114 and the second end wall 111. As an embodiment, in this embodiment, outer edges of the first end wall 114 and the second end wall 111 are circular. The side wall 112 surrounds the outer edges of the first end wall 114 and the second end wall 111 in a cylindrical shape. The second end wall 111 and the side wall 112 are formed integrally, and a circular opening 113 is formed at one end of the side wall 112 close to the first end wall 114. An accommodating chamber is formed inside the housing 110 surrounded by the second end wall 111 and the side wall 112. The accommodating chamber is for accommodating the electrode assembly 120, an electrolyte and other necessary battery components. Specifically, a diameter size of the housing 110 may be determined according to a specific dimensional size of the electrode assembly 120, such as 18mm, 21mm, 46mm, etc. There may be various options for the material of the housing 110, for example, copper, iron, aluminum, steel, aluminum alloy, etc. In order to prevent the housing 110 from rusting during long-term use, a layer of anti-rust material such as metallic nickel may also be plated on a surface of the housing 110.

Please refer to FIG. 1 to FIG. 2, the electrode assembly 120 is accommodated in the housing 110, including the tab facing the end wall. Specifically, the electrode assembly 120 is a component where electrochemical reactions occur in the secondary battery 100. The housing 110 may contain one or more electrode assemblies 120. The electrode assembly 120 includes a first electrode sheet 123, a second electrode sheet 121 and a separator 122 that are stacked and wound to form a wound structure 126. The first electrode sheet 123 and the second electrode sheet 121 have opposite polarities. In some embodiments, the first electrode sheet 123 is a positive electrode sheet, and the second electrode sheet 121 is a negative electrode sheet. In other embodiments, the first electrode sheet 123 is a negative electrode sheet, and the second electrode sheet 121 is a positive electrode sheet.

Please refer to FIG. 1 to FIG. 2, in this embodiment, the first electrode sheet 123 is a negative electrode sheet. The first electrode sheet 123 includes a negative electrode current collector 1231 and a negative electrode active substance. The negative electrode active substance is coated on a surface of the negative electrode current collector 1231. The negative electrode current collector 1231 includes a first coated region 1232 coated with the active substance and a first uncoated region 1233 not coated with the active substance. The first uncoated region 1233 is located at an end part of the first electrode sheet 123. The first uncoated region 1233 extends beyond the separator 122 along a winding axis direction of the electrode assembly 120 and is bent toward a winding axis to form a first electrode tab 124. The first electrode tab 124 is a corresponding negative electrode tab.

Please refer to FIG. 1 to FIG. 2, the second electrode sheet 121 is a positive electrode sheet. Specifically, the second electrode sheet 121 includes a positive electrode current collector 1211 and a positive electrode active substance. The positive electrode active substance is coated on a surface of the positive electrode current collector 1211. The positive electrode current collector 1211 includes a second coated region 1212 coated with the active substance and a second uncoated region 1213 not coated with the active substance. The second uncoated region 1213 is located at an end part of the second electrode sheet 121. The second uncoated region 1213 extends beyond the separator 122 along another end of the winding axis direction of the electrode assembly 120 and is bent toward the winding axis to form a second electrode tab 125. The second electrode tab 125 is a corresponding positive electrode tab.

Please refer to FIG. 1 to FIG. 2, the separator 122 is disposed between the first electrode sheet 121 and the second electrode sheet 123 to isolate a positive electrode active substance layer from a negative electrode active substance layer. Taking the lithium-ion secondary battery 100 as an example, a material of the positive electrode current collector 1211 may be aluminum. The positive electrode active substance layer includes the positive electrode active substance. The positive electrode active substance may be lithium cobalt oxide, lithium iron phosphate, ternary lithium or lithium manganese oxide, etc. A material of the negative electrode current collector 1231 may be copper. The negative electrode active substance layer includes the negative electrode active substance. The negative electrode active substance may be carbon or silicon, etc. A base material of the separator 122 may be polypropylene (abbreviated as PP) or polyethylene (abbreviated as PE), etc. To provide protection and insulation for a battery cell, an insulating film may also be used to cover the outside of the battery cell. The insulating film may be synthesized from PP, PE, polyethylene terephthalate (abbreviated as PET), polyvinyl chloride (abbreviated as PVC) or other polymer materials.

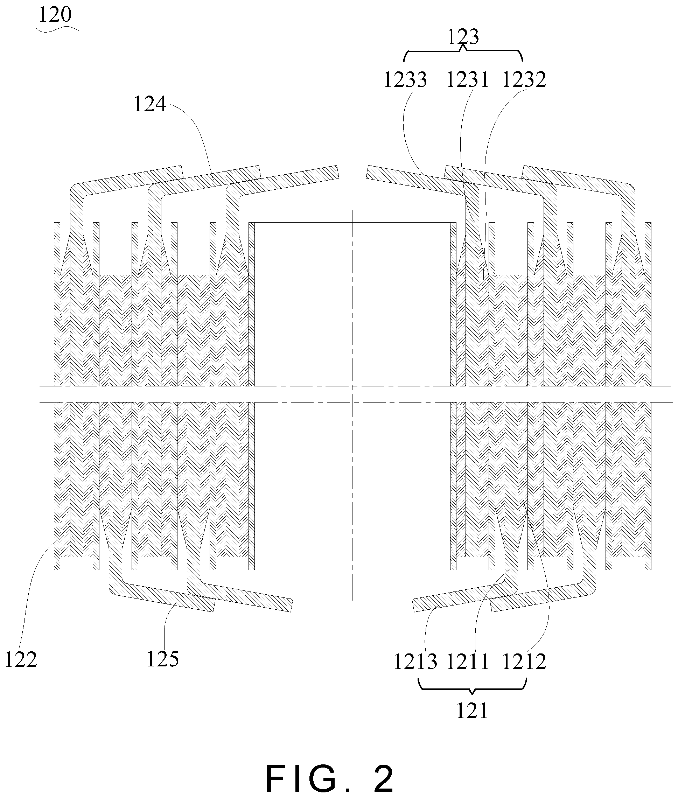

Please refer to FIG. 1 and FIG. 2, further, the first electrode tab 124 faces the first end wall 114 or faces the second end wall 111, then the second electrode tab 125 faces another end of the housing 110. In this embodiment, the second electrode tab 125 faces the second end wall 111, and is electrically connected with the terminal 130 to make the terminal 130 positively charged. The first electrode tab 124 faces the first end wall 114, the housing 110 is electrically connected with the first electrode tab 124, thereby being negatively charged. However, in other embodiments, the first electrode tab 124 may also be connected with the terminal 130, and the second electrode tab 125 may be connected with the housing 110.

Please refer to FIG. 1 and FIG. 2, the terminal 130 passes through the second end wall 111, and is insulated from the second end wall 111. The structural form of the terminal 130 may be any suitable form that is able to pass through the second end wall 111 and be electrically connected with the first electrode sheet 123 or the second electrode sheet 121, for example, the cross-section of the terminal 130 may be circular, square, prismatic or irregular contour that is able to achieve stable conduction. One end of the terminal 130 facing the electrode assembly 120 passes through the second end wall 111 and is directly electrically connected or indirectly electrically connected with the first electrode tab 124 or the second electrode tab 125. For example, the terminal 130 may be indirectly electrically connected to the first electrode sheet 123 through the current collector. One end of the terminal 130 facing away from the electrode assembly 120 is exposed to the outside of the housing 110 to form a corresponding electrode. The electrical property of the terminal 130 may be positive or negative. For example, in an embodiment, the terminal 130 is electrically connected with the first electrode sheet 123, the polarity of the first electrode sheet 123 is positive, then the terminal 130 is positive, and the housing 110 forms a corresponding negative electrode. In another embodiment, the polarity of the first electrode sheet 123 is negative, then the terminal 130 is negative, and the housing 110 forms a corresponding positive electrode. In this embodiment, the second end wall 111 is provided with a mounting hole for the terminal 130. The terminal 130 is mounted in the mounting hole for the terminal 130 in a sealed and insulated manner. The terminal 130 is indirectly electrically connected with the second electrode tab 125 through the current collector. For the convenience of distinction and comprehension, the current collector electrically connected with the second electrode tab 125 is named as a second current collector 150. One end of the terminal 130 facing away from the electrode assembly 120 is exposed to the outside of the housing 110 and is positively charged. The second current collector 150 is connected with the positive electrode tab, and is preferably made of aluminum metal.

The terminal 130 is made of a conductive metal material. A material of the terminal 130 may be aluminum. If the material of the terminal 130 is aluminum, then a riveting process may be easily performed. In this embodiment, the material of the terminal 130 is aluminum, and the polarity thereof is positive. Corresponding to the terminal 130, a material of the housing 110 is low carbon steel, and correspondingly forms a negative electrode. The terminal 130 is electrically insulated from the housing 110. Electrical insulation between the terminal 130 and the second end wall 111 of the housing 110 may be achieved in various ways. For example, insulation may be achieved by placing an insulating washer between the terminal 130 and the second end wall 111. Alternatively, insulation may be achieved by forming an insulating coating layer on a part of the terminal 130. Alternatively, some of the above methods may be applied in combination.

Further, please refer to FIG. 1, the electrode assembly 120 is electrically connected to the housing 110 through the current collector. Specifically, the current collector is welded to the first electrode tab 124. For the convenience of distinction and comprehension, the current collector electrically connected to the first electrode tab 124 is named as a first current collector 140. The welding method may adopt ultrasonic welding, resistance welding, laser welding, and so on, which is not limited herein. Laser welding is adopted in this embodiment. The first current collector 140 is connected to the negative electrode tab, and is preferably made of copper metal. It should be noted that the shapes of the first current collector 140 and the second current collector 150 may be any rotationally symmetric shapes, for example, they may be circular, square, regular polygonal, petal-shaped or other graphic shapes that have a symmetric center and may coincide with the original graphic after rotating a specific angle around the symmetric center, which is not limited herein as long as the shape is able to realize a stable and reliable electrical connection relationship. The centers of the first current collector 140 and the second current collector 150 are their own symmetric centers. In order to improve the positioning, processing convenience, interchangeability and uniformity of the current collector during the configuration process, both the first current collector 140 and the second current collector 150 in this embodiment adopt circular structures.

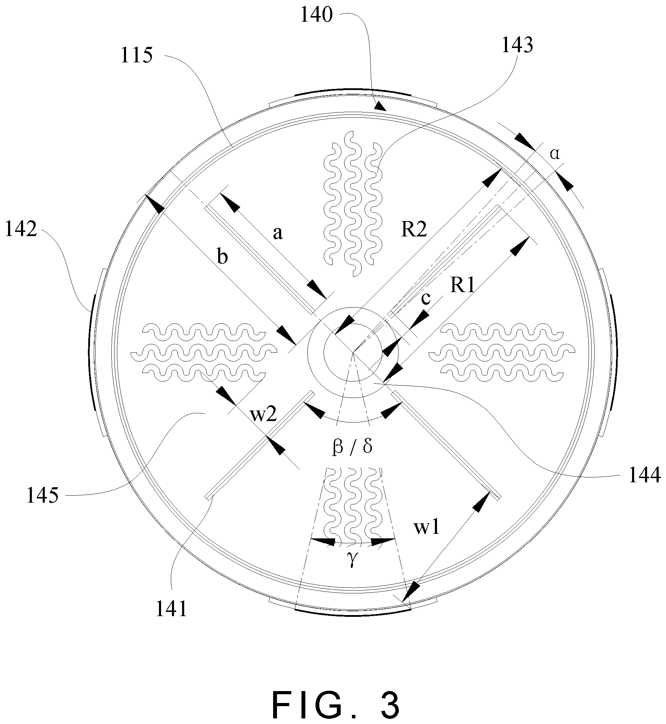

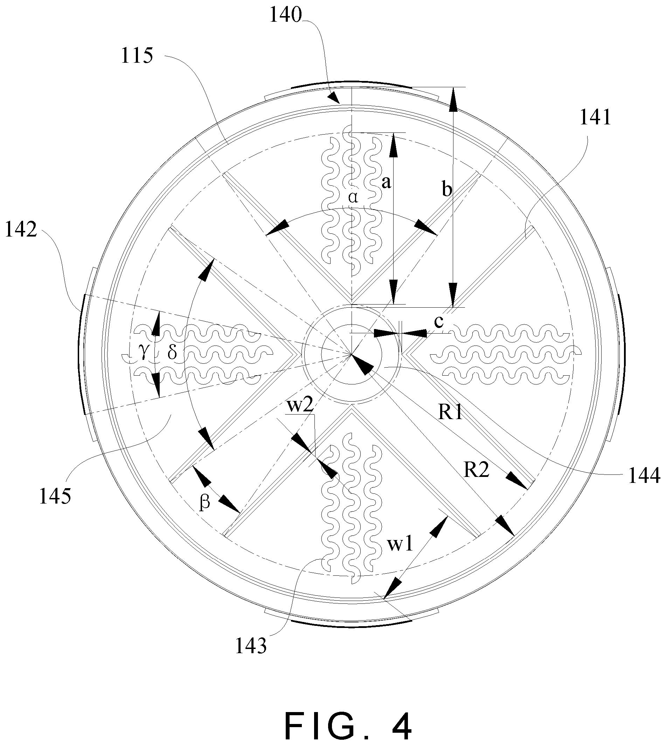

Please refer to FIG. 3 and FIG. 4, at least one fragile part 141 is disposed on the current collector. The fragile part 141 may be disposed on the first current collector 140, or may be disposed on the second current collector 150, depending on whether the explosion-proof valve 115 is disposed on the first end wall 114 or the second end wall 111. In some embodiments, the explosion-proof valve 115 is disposed on the first end wall 114, then the fragile part 141 is disposed on the first current collector 140. In other embodiments, the explosion-proof valve 115 is disposed on the second end wall 111, then the fragile part 141 is disposed on the second current collector 150. In yet other embodiment, the explosion-proof valves 115 are disposed on both the first end wall 114 and the second end wall 111, then the fragile parts 141 are disposed in both the first current collector 140 and the second current collector 150. The number of the fragile parts 141 is not limited herein, and may be 1, 2, 3, 4, 5, 6, 7, 8, 9 or more. The shape of the fragile part 141 may have multiple forms, for example, the shape may be straight line, curve (wavy line, arc line, sine curve, etc.), broken line, other irregular graphics or combinations of multiple forms mentioned above, and so on. In addition, the structure of the fragile part 141 may be in the form of scoring, thinning, perforation, or a combination of two or more of the aforementioned forms, with no limitation imposed on any of the above. Any structure of the fragile part 141 may be suitable as long as the fragile part 141 of the secondary battery 100 breaks when the internal pressure of the secondary battery 100 exceeds the threshold value, and at least part of the current collector is bent toward the direction away from the electrode assembly 120 to reduce the obstruction to the pressure release region on the adjacent first end wall 114 or second end wall 111, so that the substance inside the secondary battery 100 is successfully discharged, thus achieving directional explosion of the secondary battery 100.

Further, please refer to FIG. 3 and FIG. 4, along a radial direction of the first current collector 140, a distance from a farthest point of the fragile part 141 from a center of the first current collector 140 to a nearest point of the fragile part 141 from the center of the first current collector 140 is a. That is, a span of the fragile part 141 in the radial direction of the first current collector 140 is defined as a. Considering the possibility that an outer periphery of the first current collector 140 may have various shapes, it is further defined that a minimum central angle α covering the fragile part 141 is drawn from the center of the first current collector 140. A minimum radial width of a region of the first current collector 140 covered by the minimum central angle α is b, that is, a minimum radial width of a solid part of the first current collector 140 covered by the fragile part 141 is b, and it is limited that 0.4b≤a≤0.9b, for example, it may be 0.4b, 0.5b, 0.6b, 0.7b, 0.8b or 0.9b. Such setting may prevent the fragile part 141 from passing through the current collector along the radial direction, which would cause the current collector to be split into multiple structures by the fragile part 141, while also enhancing a structural strength of the current collector, improving the flatness of the current collector, reducing the difficulty of welding the current collector and the tab, and improving the reliability of the welding connection.

Please refer to FIG. 3 and FIG. 4, in an example of the secondary battery 100 of the present disclosure, taking the setting of the explosion-proof valve 115 on the first end wall 114 and the setting of the fragile part 141 on the first current collector 140 as an example for illustration. Along the radial direction of the first current collector 140, a maximum distance from the fragile part 141 to the center of the first current collector 140 is R1, a minimum distance from the explosion-proof valve 115 to a center of the first end wall 114 is R2, wherein R2-R1≤3mm. That is, it is limited that a maximum distance between a pressure release region formed on the first current collector 140 after a part of the first current collector 140 is folded and a pressure release region formed on the end wall after the explosion-proof valve 115 opens to be less than or equal to 3mm. R2 may be greater than R1, or may be less than or equal to R1. When R2>R1, the value of R2-R1 may be 1mm, 1.5mm, 2mm, 2.5mm or 3mm, etc. When R2≤R1, the value of R2-R1 may be -3mm, -2mm, -1mm, 0mm, etc. The above settings may all achieve maximum folding after the fragile part 141 breaks, so as to further reduce the obstruction to the discharge of internal substance. It should be noted that the explosion-proof valve 115 shown in FIG. 3 and FIG. 4 is actually located on the first end wall 114. In order to clearly show the positional relationship between the explosion-proof valve 115 and the fragile part 141, the explosion-proof valve 115 is projected on the current collector. Additionally, in this embodiment, the first end wall 114 and the current collector are disposed coaxially.

Please refer to FIG. 3 and FIG. 4, in an example of the secondary battery 100 of the present disclosure, the first current collector 140 includes a center hole 144. A minimum distance from the fragile part 141 to an edge of the center hole 144 is c, preferably, c≤2mm, which may be, for example, 0.2mm, 0.5mm, 0.8mm, 1mm, 1.2mm, 1.5mm, 1.8mm or 2mm, and so on. c≤2mm means a spacing between a position where the fragile part 141 is closest to the center hole 144 and the center hole 144 is less than or equal to 2mm. Such setting makes it easy for one end of the fragile part 141 close to the center hole 144 to easily tear during pressure release, so it is possible to improve the pressure release effect.

Please refer to FIG. 3 and FIG. 4, in an example of the secondary battery 100 of the present disclosure, preferably, R2-R1≥c. Since c is a variable greater than 0 in R2-R1, firstly, R1<R2, and such setting may enable the first current collector 140 to have a higher structural strength and flatness. Secondly, the setting of R2-R1≥c may be interpreted as limiting the distance between the position where the fragile part 141 is closest to the center hole 144 and the center hole 144 to be less than or equal to the distance between the position where the fragile part 141 is closest to the explosion-proof valve 115 and the explosion-proof valve 115. The specific value of R2-R1 is subjected to the value of c, and such setting may ensure the flatness and structural strength of the current collector while also achieving that one end of the fragile part 141 close to the center hole 144 tears more easily during pressure release. In this way, it is possible to realize an effect of folding the fragile part 141 from inside to outside along the radial direction of the current collector. Such setting significantly helps to improve the pressure release effect.

Please refer to FIG. 3 and FIG. 4, in an example of the secondary battery 100 of the present disclosure, at least one of the multiple fragile parts 141 does not connect with the remaining fragile parts 141. Making the multiple fragile parts 141 to not connect with each other or to have less connection may prevent the first current collector 140 from easily breaking at the connected parts of the multiple fragile parts 141 during transportation or welding process, and may also improve the structural strength of the first current collector 140 and the flatness of the surface. In this way, it is possible to reduce the difficulty of welding the first current collector 140 and the tab, and improving the reliability of the welding connection. In an embodiment, please refer to FIG. 3, the multiple fragile parts 141 along the circumferential direction of the first current collector 140 do not connect with each other.

Please refer to FIG. 3 and FIG. 4, in an example of the secondary battery 100 of the present disclosure, the multiple fragile parts 141 are distributed along the circumferential direction of the first current collector 140. There may be at least 3 fragile parts 141, such as 3, 4, 5, 6, 7, 8, 9 or more, and a turning angle of a radially outermost contour of the gap region between each two adjacent fragile parts 141 is β. It should be noted that the gap region is a part between the two adjacent fragile parts 141 along the circumferential direction of the first current collector 140, and the turning angle β≤120°, such as 30°, 45°, 60°, 75°, 90°, 100°, 115° or 120°, etc. There may be at least 3 fragile parts 141, and the first current collector 140 may be divided into at least 3 gap regions mentioned above along the circumferential direction thereof. When the fragile parts 141 break under the action of internal pressure, the gap regions may be folded from inside to outside to reduce obstruction to the pressure release region on the end wall. Compared to the case where 1 or 2 fragile parts 141 are present, the presence of 3 or more fragile parts 141 makes it easier for folding to be realized after breaking, and the smaller the turning angle β, the easier for the folding to be realized. Through the setting of β≤120°, on one hand, it is possible to facilitate the folding of the gap region, and on the other hand, the setting makes the distribution of the fragile parts 141 relatively uniform, so that the force applied on the gap region is also relatively uniform, which facilitates the synchronization of breaking on the fragile parts 141 while reducing the probability of unsuccessful folding of an individual gap region.

Please refer to FIG. 3 and FIG. 4, in an example of the secondary battery 100 of the present disclosure, the first current collector 140 is welded to the housing 110 to form at least one first weld mark 142. Along the circumferential direction of the first current collector 140, two points located on both circumferential sides of the first weld mark 142 are respectively connected to the center of the first current collector 140 to form a central angle γ. A region surrounded by each of the fragile parts 141 or the gap region between each of the two adjacent fragile parts 141 may form a bent part 145 when the internal pressure of the secondary battery 100 exceeds the threshold value. It should be noted that when the fragile part 141 is linear as shown in FIG. 3, the gap region between each of the two adjacent fragile parts 141 may form the bent part 145 under the action of internal pressure exceeding the threshold value. When the fragile part 141 is polygonal as shown in FIG. 4, the region surrounded by the fragile part 141 itself may also form the bent part 145 under the action of internal pressure exceeding the threshold value. Further, defining the minimum central angle covering the bent part 145 drawn from the center of the first current collector 140 as δ. Preferably, it is limited that each central angle δ at least partially overlaps with the central angle γ. Through such setting, when the bent part 145 is folded outward, at least part of the welded part between the first current collector 140 and the housing 110 may serve as a folding fulcrum for the bent part 145. Such setting is favorable for the bent part 145 to be folded smoothly, and further improves the safety performance of the secondary battery 100.

Please refer to FIG. 3 and FIG. 4, in an example of the secondary battery 100 of the present disclosure, a minimum distance between the first weld mark 142 and the fragile part 141 is greater than or equal to 1mm. This distance is shown by W1 marked in FIG. 3 and FIG. 4, for example, the distance may be 1mm, 1.5mm, 2mm, 2.5mm, 3mm, 3.5mm or 4mm, etc. Such setting may enable the fragile part 141 and the first weld mark 142 to keep a safety distance greater than or equal to 1mm, so it is possible to prevent problems such as explosion points and welding penetration during the process of welding the first current collector 140 and the housing 110, thus reducing safety hazards, and improving welding quality.

Please refer to FIG. 3 and FIG. 4, in an example of the secondary battery 100 of the present disclosure, the first current collector 140 is welded to the tab to form at least one second weld mark 143. A minimum distance between the second weld mark 143 and the fragile part 141 is greater than or equal to 1mm. This distance is marked by W2 shown in FIG. 3 and FIG. 4, for example, the distance may be 1mm, 1.5mm, 2mm, 2.5mm, 3mm, 3.5mm or 4mm, etc. Such setting may enable the fragile part 141 and the second weld mark 143 to keep a safety distance greater than or equal to 1mm, so it is possible to prevent problems such as explosion points and welding penetration during the process of welding the first current collector 140 and the tab, thus reducing safety hazards, and improving welding quality.

It should be noted that the above technical solution is also applicable to the case where the second end wall 111 is provided with the explosion-proof valve 115, as well as the second current collector 150 is provided with the fragile part 141, and the specific structure will not be described in detail. When this technical solution is applied only to the first current collector 140, only to the second current collector 150, or to both of the above simultaneously, the above technical solution may all achieve the effect of reducing the obstruction to the pressure release region and improving the safety performance of the secondary battery 100.

In an example of the secondary battery 100 of the present disclosure, please refer to FIG. 3, the fragile part 141 is a linear score. 4 fragile parts 141 are evenly distributed along the circumferential direction of the first current collector 140, and the 4 fragile parts 141 are not connected to each other, wherein a=12.8mm, b=18.2mm, R1=17.7mm, R2=20.2mm, R2-R1=2.5mm, c=0.9mm, and β=90°. The two central angles γ and δ have an overlapped part, wherein w1=12mm, w2=3.6mm.

In another example of the secondary battery 100 of the present disclosure, please refer to FIG. 4, the fragile part 141 is a broken line-shaped score, and an included angle of the broken line is 90°. A corner of the broken line is close to the center of the first current collector 140, the opening 113 faces the outer periphery of the first current collector 140. 4 fragile parts 141 are evenly distributed along the circumferential direction of the first current collector 140, and the 4 fragile parts 141 are not connected to each other, wherein a=14.2mm, b=18.25mm, R1=18mm, R2=20.2mm, R2-R1=2.2mm, c=0.25mm, and β=90°. The two central angles γ and δ have an overlapped part, wherein w1=8.6mm, w2=0.65mm.

In both of the above two examples, the fragile part 141 may achieve the effect of reducing the obstruction to the pressure release region on the first end wall 114 by the first current collector 140 when the secondary battery 100 undergoes thermal runaway. The technical solution of the above examples is also applicable to the second current collector 150 and the second end wall 111 and may achieve the same effect, which will not be described in detail.

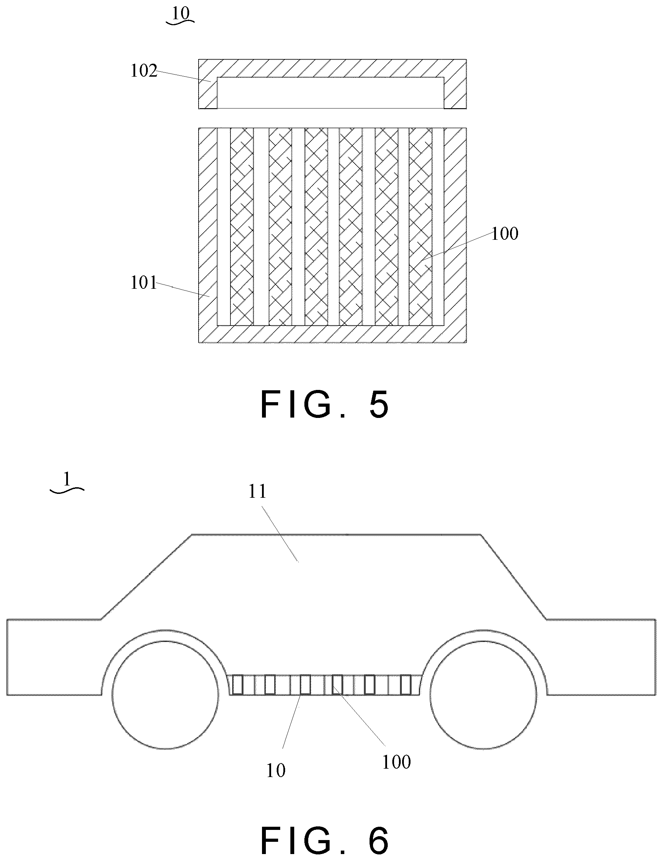

Please refer to FIG. 5, the present disclosure further provides a battery pack 10. The battery pack 10 includes the secondary battery 100 according to any one of the above embodiments. In an embodiment of the battery pack 10 of the present disclosure, the battery pack 10 includes a casing 101, a casing cover 102 and a plurality of secondary batteries 100. The plurality of secondary batteries 100 are placed in the casing 101, connected in series or in parallel with each other, or in a combination of series and parallel connection. The casing cover 102 seals the casing 101 to protect the plurality of secondary batteries 100. It should be noted that the battery pack 10 may also include a thermal management system of the battery pack 10, circuit boards, and other parts other than the secondary battery 100 of the present disclosure. The battery pack 10 may be a battery module or a battery pack, an energy storage cabinet, and so on; these will not be described in detail here.

Please refer to FIG. 6, the present disclosure further provides an electronic device 1. The electronic device 1 includes the above battery pack 10. An operation part 11 is electrically connected to the battery pack 10 to obtain electrical energy support. As an example, the electronic device 1 is a vehicle, and the vehicle may be a fuel vehicle, a gas vehicle or a new energy vehicle. The new energy vehicle may be a pure electric vehicle, a hybrid vehicle or a range-extended vehicle, and so on, but is not limited thereto. The operation part 11 is a vehicle body. The battery pack 10 is disposed at the bottom of the vehicle body, and provides electrical energy support for the operation of the vehicle or the operation of electrical components in the vehicle. However, in some other examples, the electronic device 1 may also be a mobile phone, a portable device, a laptop computer, a ship, a spacecraft, an electric toy and an electric tool, etc. The spacecraft includes aircraft, rockets, space shuttles and spaceships, etc. The operation part 11 may be a unit component that may obtain electrical energy from the battery pack 10 and perform corresponding operations, for example, a blade rotation unit of a fan, a dust suction operation unit of a vacuum cleaner, etc. The electric toys include fixed or mobile electric toys, for example, game machines, electric car toys, electric ship toys and electric airplane toys, etc. The electric tools include metal cutting electric tools, grinding electric tools, assembly electric tools and railway electric tools, for example, electric drills, electric grinders, electric wrenches, electric screwdrivers, electric hammers, impact drills, concrete vibrators and electric planers, etc. The examples of the present disclosure do not impose special restrictions on the above electronic device 1.

In the secondary battery of the present disclosure, the current collector is provided with multiple fragile parts. The fragile parts are configured to break when the internal pressure of the secondary battery exceeds the threshold value, and at least part of the current collector is bent toward the direction away from the electrode assembly to reduce obstruction to the pressure release region on the end wall. The distance between the farthest point of the fragile part from the center of the current collector and the nearest point of the fragile part from the center of the current collector is defined as a, and it is further defined that the minimum central angle covering the fragile part drawn from the center of the current collector is α, the minimum radial width of the region of the current collector covered by the minimum central angle α is b, and 0.4b≤a≤0.9b. Such setting may prevent the fragile part from passing through the current collector along the radial direction, thereby enhancing the structural strength of the current collector, enabling the current collector to have the higher flatness, and reducing the difficultly of welding the current collector and the tab, thus improving the reliability of welding connection. Therefore, the present disclosure effectively overcomes some practical problems in the related art and thus possesses high utilization value and practical significance. The aforementioned embodiments are merely illustrative of the principles and effects of the present disclosure and are not intended to limit the present disclosure.

## Claims

1. A secondary battery (100), comprising:
a housing (110), comprising an end wall (111, 114), wherein an explosion-proof valve (115) is disposed on the end wall (111, 114);
an electrode assembly (120), accommodated in the housing (110), and the electrode assembly (120) comprising a tab facing the end wall (111, 114);
a current collector (140, 150), disposed between the electrode assembly (120) and the end wall (111, 114) and electrically connected to the tab, wherein the secondary battery (100) is **characterized in that** at least one fragile part (141) is disposed on the current collector (140, 150), the fragile part (141) is configured to break when an internal pressure of the secondary battery (100) exceeds a threshold value, and at least a part of the current collector (140, 150) is bent in a direction away from the electrode assembly (120) to reduce obstruction to a pressure release region;
wherein along a radial direction of the current collector (140, 150), a span of the fragile part (141) is a, a minimum central angle α covering the fragile part (141) is drawn from a center of the current collector (140, 150), a minimum radial width of a region of the current collector (140, 150) covered by the minimum central angle α is b, and 0.4b≤a≤0.9b.

2. The secondary battery (100) according to claim 1, wherein along the radial direction of the current collector (140, 150), a maximum distance from the fragile part (141) to the center of the current collector (140, 150) is R1, a minimum distance from the explosion-proof valve (115) to a center of the end wall (111, 114) is R2, wherein R2-R1≤3mm.

3. The secondary battery (100) according to claim 2, wherein the current collector (140, 150) comprises a center hole (144), a minimum distance from the fragile part (141) to an edge of the center hole (144) is c, wherein c≤2mm.

4. The secondary battery (100) according to claim 3, wherein R2-R1≥c.

5. The secondary battery (100) according to claim 1, wherein there are a plurality of the fragile parts (141), and at least one of the plurality of fragile parts (141) is not connected to any of the other fragile parts (141).

6. The secondary battery (100) according to claim 1, wherein a number of the fragile parts (141) is at least 3, all of the fragile parts (141) are distributed along a circumferential direction of the current collector (140, 150), a turning angle of a radially outermost contour of a gap region between every two of the adjacent fragile parts (141) is β, wherein β≤120°.

7. The secondary battery (100) according to claim 6, wherein the current collector (140, 150) and the housing (110) are welded and connected to form at least one first weld mark (142), along the circumferential direction of the current collector (140, 150), two points located on both circumferential sides of the first weld mark (142) are respectively connected to the center of the current collector (140, 150) to form a central angle γ, each region surrounded by the fragile part (141) or the gap region between every two of the adjacent fragile parts (141) forms a bent part (145) when the internal pressure of the secondary battery (100) exceeds the threshold value, a minimum central angle δ covering the bent part (145) is drawn from the center of the current collector (140, 150), and each of the central angle δ at least partially overlaps with the central angle γ.

8. The secondary battery (100) according to claim 7, wherein a minimum distance between the first weld mark (142) and the fragile part (141) is greater than or equal to 1mm.

9. The secondary battery (100) according to claim 1, wherein the current collector (140, 150) and the tab are welded and connected to form at least one second weld mark (143), and a minimum distance between the second weld mark (143) and the fragile part (141) is greater than or equal to 1 mm.

10. The secondary battery (100) according to claim 1, wherein the fragile part (141) is able to be in a form of any one of scoring, thinning, perforation, or a combination of two or more of the above.

11. The secondary battery (100) according to claim 1, wherein there are a plurality of the fragile parts (141), the plurality of fragile parts (141) are distributed along a circumferential direction of the current collector (140, 150), and each of the plurality of fragile parts (141) is extended along the radial direction of the current collector (140, 150).

12. The secondary battery (100) according to claim 5, wherein the current collector (140, 150) is provided with a plurality of groups of the fragile parts (141), each of the fragile parts (141) is extended along the radial direction of the current collector (140, 150), one end of each group of the fragile parts (141) close to the center of the current collector (140, 150) is connected to one another.

13. The secondary battery (100) according to claim 5, wherein the current collector (140, 150) comprises a plurality of the fragile parts (141), the plurality of the fragile parts (141) are not connected to each other.

14. A battery pack (10), comprising the secondary battery (100) according to any one of claims 1-13.

15. An electronic device (1), comprising the battery pack (10) according to claim 14.
